# EUROPEAN PATENT SPECIFICATION

(11) **EP 3 356 217 B1**
(45) Date of publication and mention of the grant of the patent: **27.05.2020**
(21) Application number: 16787335.5
(22) Date of filing: 20.09.2016
(51) Int. Cl.: D07B 7/16, B63B 21/04, B63B 21/06, B63B 27/00, D07B 1/18, F16G 11/14

(54) **SYSTEM AND METHODS FOR HOLDING BACK A TENSIONED ROPE USING A WEDGE THIMBLE**
SYSTEM UND VERFAHREN ZUM ZURÜCKHALTEN EINES GESPANNTEN SEILS MIT EINEM KEIL
SYSTÈME ET PROCÉDÉS DE RETENUE D'UN CÂBLE TENDU À L'AIDE D'UNE COSSE À COIN

(30) Priority: 30.09.2015 GB 201517284
(43) Date of publication of application: 08.08.2018
(73) Proprietor: Subsea 7 Norway AS, 4033 Stavanger (NO)
(72) Inventor: KJØNNERØD, Aleksander Alvær, 4022 Stavanger (NO); BRANDSVOLL, Rolf Anders, 4056 Tananger (NO)
(74) Representative: Cummings, Sean Patrick
(86) International application number: PCT/EP2016/072318
(87) International publication number: WO 2017/055140

(56) References cited:
- WO-A1-03/062042
- WO-A1-2013/165257
- GB-A- 1 008 225
- US-A- 2 381 193
- US-A- 2 403 057
- US-A- 4 750 445
- US-B1- 8 201 309

## Description

This invention relates to holding back a tensioned rope, as used in marine applications such as in the subsea oil and gas industry. Such a rope may be made of synthetic fibre or of metal, in the latter case also being known in the art as a wire or a cable. 'Rope', 'wire' and 'cable' are used interchangeably in this specification unless the context indicates otherwise.

The invention relates particularly to the problem of temporarily holding back a rope aboard an anchor handling tug (AHT) before connecting another length of rope. The invention is particularly useful where a rope cannot withstand bending around a small radius or if it is vulnerable to crushing, such as where the rope incorporates a mud filter layer.

It is sometimes necessary to connect successive line sections when lowering loads deeper and deeper in water. Similarly, when a line is heterogeneous, a connection is necessary between successive different line sections. An example of a heterogeneous line is a mooring line, which can comprise end sections made of chain and intermediate sections made of metallic wire or synthetic rope. Due to the length and bulk of wires or ropes, pre-connection of sections is rarely available as an option. Consequently, connection has to be performed on the deck of a vessel after paying out a first section of the line into the water. This places the line under tension due to its self-weight and any other load that the line may bear.

A conventional technique for connecting synthetic rope is disclosed in GB 2499178. With specific reference to Fig. 7 of GB 2499178, a lower section of a rope is passed through a pair of towing pins or bollards that are mounted on a rotatable support on the deck of a vessel. The pins turn, thus jamming the rope by friction. The upper, free end of the lower rope can then be connected to another wire or rope, to the links of a chain or to an H-link connector.

Whilst the technique disclosed in GB 2499178 is quick and convenient, it has the major drawback that only a limited load can safely be held back by the pins. Limiting factors are the motor design of the rotating support and the coefficient of friction, because during rotation the rope and its load have to be held back by the rotating system. Additionally, the radius of curvature of the pins may be less than an acceptable minimum bending radius for large-diameter ropes or cables.

Another conventional solution is partially to transfer a tensile load to multiple cranes or hold-back winches. However, this creates a tripping hazard. Also, transferring the load takes time and any misalignment of the system may generate points of weakness in the system, leading to failures that can be very dangerous for personnel aboard the vessel. There is a whipping hazard in case of rupture, where the outcome is often fatal. Another well-known solution is to use a clamping system comprising, for example, wedges, tensioners, jaws or cleats as disclosed in GB 2018344 and WO 2004/078577. WO 2005/083312 discloses friction clamping by braids of cables. In WO 2013/187769, a gripper is held back by interfacing with two towing pins on the tug vessel.

Clamping solutions have many drawbacks. The rope is held by friction, which is not safe enough for supporting critical heavy loads. Also, as the rope is compressed, this may crush or otherwise damage the surface and the outermost layers of the rope. The risk of such damage is a particular problem where the rope incorporates a mud filter layer.

US 5016026 discloses a wedge-shaped insert in the thimble of a rope that carries load cells for measuring tension between the rope and a link passing through the thimble. The insert is not suitable for holding back a long and thick rope as used in the subsea oil and gas industry.

Other solutions for securing anchoring means or mooring lines are also known. For example, US2403057 relates to a mooring device mounted on the deck of a boat and comprising a deck plate with a T slot that is arranged to engage securely with a mooring line thimble having a T-head so as to retain securely the mooring line. EP1977967 relates to a link for connecting heavy duty mooring lines to one another, the link comprising two side plates joined by hollow shafts with diameters sized to allow polymer lines to bend around the shafts without breaking. GB2089750 describes a stop assembly on a vessel which connects a mooring anchor to an associated buoy via a buoy line; the stop assembly comprises a fork-shaped stop member arranged to restrain a rope wire thimble or equivalent so as to lock the buoy line in position. US4531470 describes a mooring coupler for connecting a mooring line between a dock and a vessel.

WO 2013/165257 A1 discloses a tow line controlling device having two tow pins movable between a passive and an active positions.

The invention provides safer ways to make a connection between successive rope sections on a vessel equipped with towing pins or bollards. Such pins are normally arranged in pairs.

The invention is defined broadly in the appended independent claims. Preferred optional features are set forth in the appended dependent claims.

In one sense, the invention resides in apparatus for temporarily holding back a tensioned rope from one or more supporting bollard pins on a deck of a vessel. The rope has an eye formed in its upper end, for example by a splice; the lower end of the rope will typically be submerged in water. The apparatus comprises: a wedge thimble inserted or insertable into the eye of the upper end of the rope; a pair of bollard pins that are aligned with each other on an axis that is transverse to a longitudinal direction of the rope and at least one support part coupled to the pair of bollard pins, wherein the at least one support part comprises a pair of structures cooperable with the pair of bollard pins and joined by a cross-member, and at least one support arm positioned to extend away from one of the bollard pins; and a movable or removable locking element positionable to act between the wedge thimble and the pair of bollard pins. The locking element comprises an elongate rod arranged to be inserted into a bore of the wedge thimble to extend substantially transversely to the longitudinal direction of the rope, and to cooperate with the pair of bollard pins via a recessed free end of the support arm of the at least one support part that is shaped to complement the elongate rod of the locking element to transfer tension load from the rope to the bollard pins.

The at least one support part is coupled, preferably movably or removably, to the pair of bollard pins. The wedge thimble is preferably removable from the eye of the upper end of the rope.

A portion of the eye may remain between the wedge thimble and a loop at an upper end of the rope. That portion of the eye of the rope protrudes while the wedge thimble and the locking element are in place and the rope is supported by the pair of bollard pins. The protruding portion of the eye can be connected conveniently to any rope-connecting device, such as an H-link.

The inventive concept extends to a method for holding-back a tensioned rope from a pair of bollard pins on a deck of a vessel. The method comprises: bringing an upper end of the rope beside or preferably between the pair of bollard pins; while holding back the rope with a tensioning apparatus such as a hoist or a winch, positioning a locking element to act between the pair of bollard pins and a wedge thimble in an eye at the upper end of the rope; and releasing hold-back tension until the tension of the rope is transferred to the pair of bollard pins via cooperation between the locking element and the pair of bollard pins. Positioning the locking element involves inserting an elongate rod into a bore of the wedge thimble to extend substantially transversely to the longitudinal direction of the rope and to cooperate with the pair of bollard pins via at least one support part coupled to the pair of bollard pins.

The method may be preceded by inserting the wedge thimble into the eye at the upper end of the rope. The method may further comprise mounting the or each support part on or coupling the or each support part to the pair of bollard pins.

The inventive concept can also be expressed in terms of a method to release a tensioned rope held back by a pair of bollard pins on a deck of a vessel. That method involves applying hold-back tension to the rope until the tension of the rope is transferred away from the pair of bollard pins; moving or removing a locking element acting or that acted between the pair of bollard pins and a wedge thimble in an eye at the upper end of the rope, by removing an elongate rod extending transversely to a longitudinal direction of the rope from a bore of the wedge thimble and cooperating with the pair of bollard pins via at least one support part coupled to the pair of bollard pins; and maintaining hold-back tension while moving the upper end of the rope away from the pair of bollard pins.

The inventive concept also finds expression in a method to connect an additional item of equipment, such as a connector between rope sections, to a tensioned rope section held back by a pair of bollard pins on a deck of a vessel. That method comprises: connecting the additional item of equipment to the held-back rope section; pulling back the additional item of equipment to transfer the tension of the rope section from the pair of bollard pins; and moving or removing a locking element acting or that acted between the or each pin and a wedge thimble in an eye at an upper end of the rope by removing an elongate rod extending transversely to a longitudinal direction of the rope from a bore of the wedge thimble and cooperating with the pair of bollard pins via at least one support part coupled to the pair of bollard pins.

The wedge thimble may also be removed from the rope section, as can any intermediate support part that was interposed between the locking element and the or each pin.

In order that the invention may be more readily understood, reference will now be made, by way of example, to the accompanying drawings in which:
Figures 1 to 5 are a sequence of schematic side views of a deck of a vessel showing initial steps of a method of the invention, with Figures 4 and 5 also including corresponding top plan views;
Figure 6 is a perspective view of a thimble fitted into an eye of a rope in accordance with the invention; and
Figures 7 and 8 are further schematic side views of a deck of a vessel, showing additional steps of the method of the invention

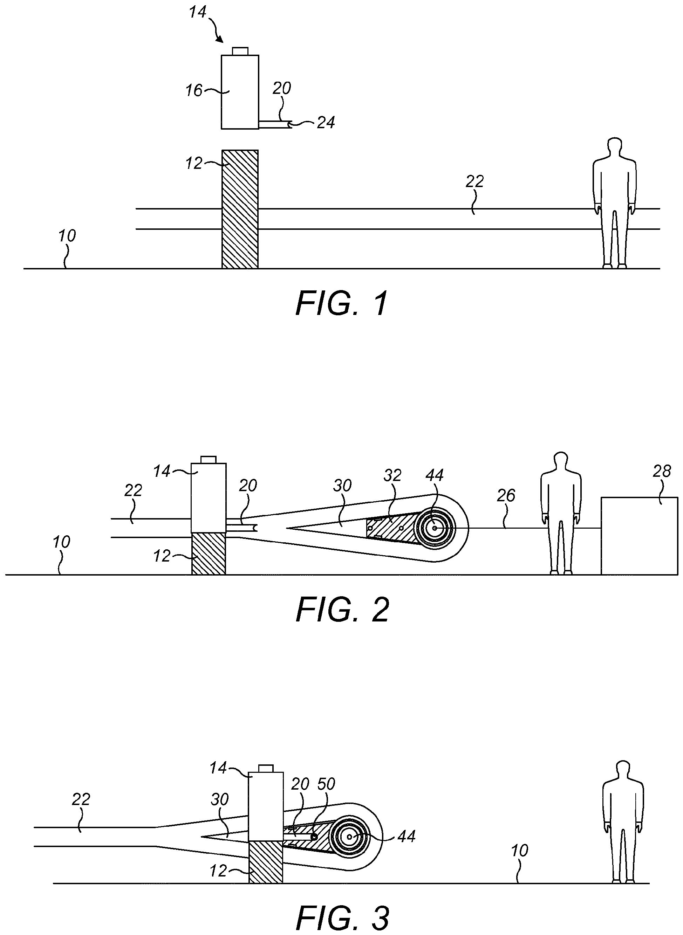

Figure 1 shows a deck 10 of a vessel having a pair of tow pins or bollard pins 12 (only one of which is visible in this side view) upstanding from the deck 10. A support part 14 is shown being lowered onto the pins12. A rail crane (not shown) on the vessel may conveniently be used for this operation.

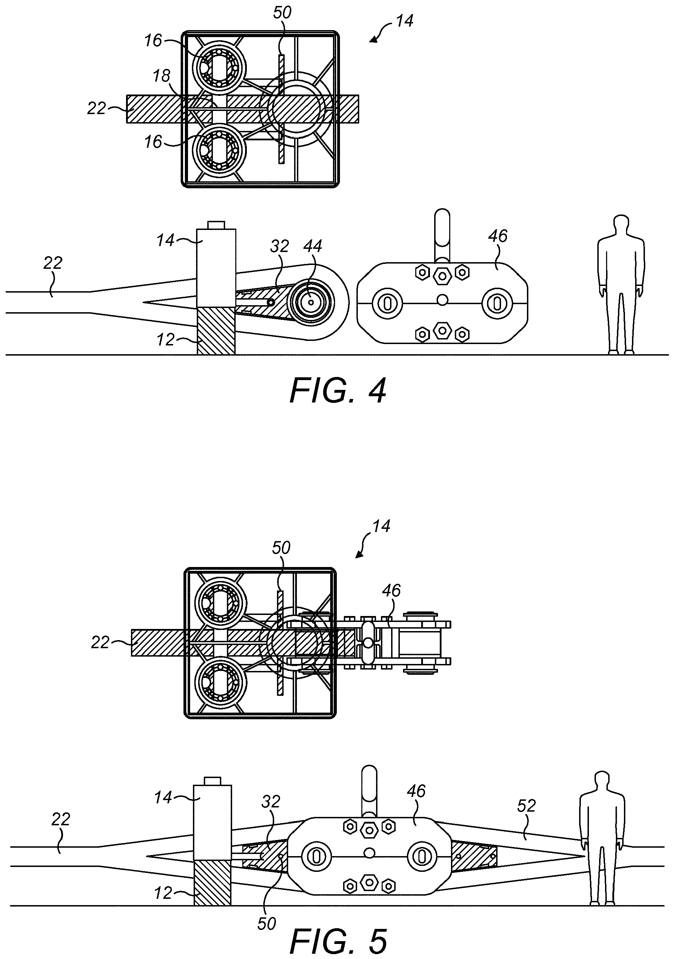

The support part 14 comprises open-bottomed caps 16 that seat onto the top of the pins 12. The caps 16 are conveniently joined by a cross-member 18 as shown in the plan views of Figures 4 and 5 for rigidity and to be handled together.

Support arms 20 extend in parallel from the caps 16, one arm 20 being cantilevered from each cap 16. When the support part 14 is engaged with the pins 12, the support arms 20 extend in a common horizontal plane generally parallel to a first length of synthetic rope 22, pointing generally toward the upper end of the first length of rope 22. Each support arm 20 terminates in a concave recess 24.

The pins 12 are aligned with each other on an axis that is transverse, specifically orthogonal, to the longitudinal direction of the first length of rope 22. The pins 12 are spaced apart to define a gap between them through which the upper end of the first length of rope 22 is pulled by hold-back tension applied through rigging 26 by a winch 28 or a hoist, with reference to Figure 2, which also shows that the first length of rope 22 is looped at its upper end to form an eye 30.

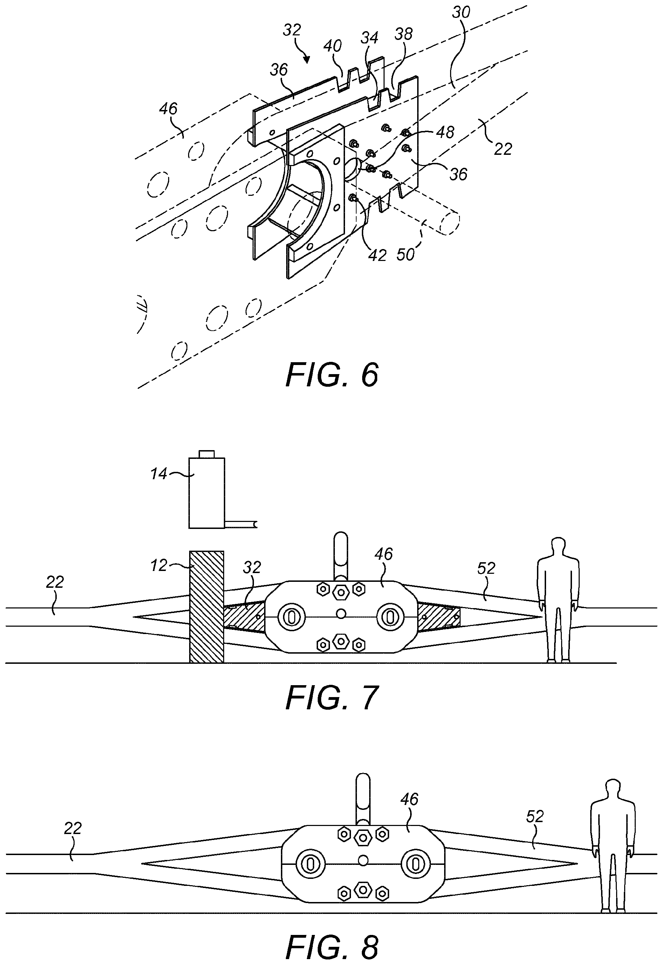

Figure 2 also shows the support part 14 now attached to the pins 12, and a wedge-shaped thimble 32 placed or assembled in the tapering portion of the eye 30 facing away from the upper end of the first length of rope 22. With reference to Figure 6, the thimble 32 comprises upper and lower faces 34 that converge away from the upper end of the first length of rope 22 to match the taper of the eye 30. The upper and lower faces 34 are joined by bolted side plates 36. The side plates 36 overlap the upper and lower faces 34 to define channels 38 that locate the thimble 32 relative to the first length of rope 22. Cut-outs 40 in upper and lower edges of the side plates 36 are optional to reduce the weight of the side plates 36 below a threshold for manual handling.

Tensioning the bolts 42 squeezes the first length of rope 22 gently between the side plates 36. This pressure is simply to locate the thimble 32 in the eye 30 and is not to apply hold-back forces to the first length of rope 22 by clamping; it will not damage the rope 22.

The thimble 32 does not fill the eye 30 but leaves the upper end portion of the eye 30 to be filled by a circular connector 44 for attaching the winch rigging 26 and later an H-connector 46 to the first length of rope 22. The wider end of the thimble 32 defined by the side plates 36 is convex-curved with part-circular curvature to fit against the connector 44. The connector 44 thus seats into and bears against the thimble 32.

A circular interface (for example, a bearing ring or half-ring) can seat between the thimble 32 and the eye 30 - another half ring sitting on the other side of the eye 30, on the rope 22, so that a link or shaft of the connector 44 is inserted into the eye 30 or the ring seating inside the eye 30.

Aligned holes 48 in the side plates 36 define a transverse passageway through the thimble 32. This passageway can accommodate a rod 50, shown in dashed lines in Figure 6, which extends orthogonally with respect to the length of the rope 22. When inserted into the passageway, the rod 50 protrudes orthogonally from both side plates 36 of the thimble 32. Again, a rail crane on the vessel may conveniently be used to handle the rod 50.

As best shown in the plan views of Figures 4 and 5, the length of the rod 50 is sufficient to extend beyond the spacing between the parallel support arms 20. The curvature of the rod 50 seats into the concave recessed ends 24 of the support arms 20 when the upper end of the first length of rope 22 is allowed to retract under tension. As shown in Figure 3, this movement of the first length of rope 22 engages the rod 50 with the support arms 20 and hence creates a load path from the first length of rope 22, through the connector 44 and the thimble 32 to the rod 50 and from there to the support part 14 and the pins 12. The protruding rod 50 can be used as a lever to manipulate the upper end of the first length of rope 22 into position for engaging the rod 50 with the support arms 20.

With hold-back force thus maintained, the winch 28 is released and the winch rigging 26 is removed from the connector 44. Next, an H-connector 46 is lifted beside the upper end of the first length of rope 22 as shown in Figure 4 before being connected to the first length of rope 22 via the connector 44 as shown on Figure 5. Figure 5 also shows a second length of rope 52 similarly connected to the other side of the H-connector 46. Thus, the H-connector 46 joins the first length of rope 22 to the second length of rope 52.

Next, by applying tension to the second length of rope 52, the H-connector 46 pulls the thimble 32 away from the pins 12. This movement disengages the rod 50 from the support arms 20, allowing the rod 50 to be removed from the thimble 32 and the support part 14 to be removed from the pins 12.

Finally the thimble 32 may be removed from the eye 30 as shown in Figure 8. The lengths of rope 22, 52 joined by the H-connector 46 are now ready to be launched into the sea.

Thus, the invention inserts a hang-off tool into the eye of a rope behind the permanent spool. A locking element exemplified by a rod inserted through the tool interfaces with the bollard pins of the vessel, optionally through an interface structure such as the support part described above.

Advantageously, the invention does not rely upon friction but instead uses positive mechanical engagement to apply hold-back forces to a rope. This avoids crushing or bending the rope as a result of applying hold-back forces to the rope by clamping or other frictional techniques. The invention is especially beneficial when used for thick, large-diameter synthetic ropes that are difficult to bend around a small bollard or pin. Conventional solutions involve squeezing or otherwise gripping a rope, which is not desirable if the rope contains a mud filter layer and as synthetic ropes are more fragile than steel ropes.

The loading surface on the rope is the same as for in-place application, meaning that no additional validation tests are required. The arrangement of the invention can handle higher loads than a towing sock or sleeve arrangement known to the skilled reader as a 'Chinese finger'.

Other variations are possible within the inventive concept. For example, some or all features of the support part could be integrated with the or each supporting pin. In particular, the pins could have aligned horizontally-extending grooves or notches that serve the same purpose as the recessed ends of the support arms, namely to engage a rod that spans the gap between the pins. However, the removable support part shown in the drawings has the advantage of being simple to retrofit to an existing vessel without requiring modification of its existing bollard pins.

## Claims

1. Apparatus for temporarily holding back a tensioned rope (22) from a pair of bollard pins (12) on a deck (10) of a vessel, the apparatus comprising:
a wedge thimble (32) inserted or insertable into an eye (30) at an upper end of the rope (22);
a pair of bollard pins (12) that are aligned with each other on an axis that is transverse to a longitudinal direction of the rope (22) in use; and
at least one support part (14) coupled to the pair of bollard pins (12), wherein the at least one support part comprises a pair of structures cooperable with the pair of bollard pins and joined by a cross-member, and at least one support arm positioned to extend away from one of the bollard pins; and
a locking element (50) positionable to act between the wedge thimble (32) and the pair of bollard pins (12) in use, the locking element (50) comprising an elongate rod arranged to be inserted into a bore (48) of the wedge thimble (32) to extend transversely to a longitudinal direction of the rope (22) in use, and to cooperate with the pair of bollard pins (12) via a recessed free end of the support arm of the at least one support part (14) that is shaped to complement the elongate rod of the locking element to transfer tension load from the rope (22) to the bollard pins (12).

2. The apparatus of Claim 1, wherein the bollard pins (12) are spaced apart to define a gap between them, which gap accommodates the rope (22) in use.

3. The apparatus of any preceding claim, wherein the support part (14) is movable relative to the pair of bollard pins (12) or is removable from the pair of bollard pins (12).

4. The apparatus of Claim 3, wherein the support part (14) comprises at least one inverted cup (16) that fits onto at least one of the bollard pins (12).

5. The apparatus of any preceding claim, wherein the locking element (50) is movable relative to the wedge thimble (32) or is removable from the wedge thimble (32).

6. The apparatus of any preceding claim, wherein the wedge thimble (32) is removable from the eye (30) of the rope (22).

7. A method for holding-back a tensioned rope (22) from a pair of bollard pins (12) on a deck (10) of a vessel using the apparatus of any preceding claim, the method comprising:
bringing an upper end of the rope (22) beside the pair of bollard pins (12);
while holding back the rope (22) under tension, positioning a locking element (50) to act between the pair of bollard pins (12) and a wedge thimble (32) in an eye (30) at the upper end of the rope (22) by inserting an elongate rod into a bore (48) of the wedge thimble (32) to extend transversely to a longitudinal direction of the rope (22) and to cooperate with the pair of bollard pins (12) via at least one support part (14) coupled to the pair of bollard pins (12); and
releasing hold-back tension until the tension of the rope (22) is transferred to the pair of bollard pins (12) via the cooperation between the locking element (50) and the at least one support part (14).

8. The method of Claim 7, preceded by inserting the wedge thimble (32) into the eye (30) at the upper end of the rope (22).

9. The method of Claim 7 or Claim 8, further comprising mounting the support part (14) on, or coupling the support part (14) to, the pair of bollard pins (12).

10. A method of releasing a tensioned rope (22) held back by a pair of bollard pins (12) on a deck (10) of a vessel using the apparatus of any of claims 1 to 6,
the method comprising:
applying hold-back tension to the rope (22) until the tension of the rope is transferred away from the pair of bollard pins (12);
moving or removing a locking element (50) acting between the pair of bollard pins (12) and a wedge thimble (32) in an eye (30) at the upper end of the rope (22) by removing an elongate rod extending transversely to a longitudinal direction of the rope (22) from a bore (48) of the wedge thimble (32) and cooperating with the pair of bollard pins (12) via at least one support part (14) coupled to the pair of bollard pins (12); and
maintaining hold-back tension while moving the upper end of the rope (22) away from the pair of bollard pins (12).

11. A method to connect an additional item of equipment, such as a connector (46) between rope sections, to a tensioned rope section (22) held back by a pair of bollard pins (12) on a deck (10) of a vessel using the apparatus of any of claims 1 to 6,
the method comprising:
connecting the additional item of equipment (46) to the held-back rope section (22);
pulling back the additional item of equipment (46) to transfer the tension of the rope section (22) from the pair of bollard pins (12); and
moving or removing a locking element (50) acting between the pair of bollard pins (12) and a wedge thimble (32) in an eye (30) at an upper end of the rope (22) by removing an elongate rod extending transversely to a longitudinal direction of the rope (22) from a bore (48) of the wedge thimble (32) and cooperating with the pair of bollard pins (12) via at least one support part (14) coupled to the pair of bollard pins (12).

## Patentansprüche

1. Vorrichtung zum vorübergehenden Zurückhalten eines gespannten Seils (22) von einem Paar von Pollerpinnen (12) auf einem Deck (10) eines Schiffs, wobei die Vorrichtung umfasst:
eine Klemmkausche (32), die in ein Auge (30) an einem oberen Ende des Seils (22) eingeführt oder einführbar ist;
ein Paar von Pollerpinnen (12), die auf einer Achse, die quer zu einer Längsrichtung des verwendeten Seils (22) verläuft, miteinander ausgerichtet sind; und
mindestens ein Stützteil (14), das mit dem Paar von Pollerpinnen (12) gekoppelt ist, wobei das mindestens eine Stützteil ein Paar von Strukturen umfasst, die mit dem Paar von Pollerpinnen zusammenwirken und durch einen Querträger verbunden sind, und mindestens einen Stützarm, der so positioniert ist, dass er sich von einer der Pollerpinnen weg erstreckt; und
ein Verriegelungselement (50), das positionierbar ist, um zwischen der Klemmkausche (32) und dem Paar der verwendeten Pollerpinnen (12) einzuwirken, wobei das Verriegelungselement (50) eine längliche Stange umfasst, die ausgebildet ist, um in eine Bohrung (48) der Klemmkausche (32) eingeführt zu werden, um sich quer zu einer Längsrichtung des verwendeten Seils (22) zu erstrecken, und mit dem Paar von Pollerpinnen (12) über ein ausgespartes freies Ende des Stützarms des mindestens einen Stützteils (14), das so geformt ist, dass es die längliche Stange des Verriegelungselements ergänzt, zusammenzuwirken, um die Spannungslast vom Seil (22) auf die Pollerpinnen (12) zu übertragen.

2. Vorrichtung nach Anspruch 1, wobei die Pollerpinnen (12) voneinander beabstandet sind, um einen Spalt zwischen diesen zu definieren, wobei dieser Spalt das verwendete Seil (22) aufnimmt.

3. Vorrichtung nach einem der vorhergehenden Ansprüche, wobei das Stützteil (14) in Bezug auf das Paar von Pollerpinnen (12) beweglich oder vom Paar von Pollerpinnen (12) entfernbar ist.

4. Vorrichtung nach Anspruch 3, wobei das Stützteil (14) mindestens eine umgekehrte Schale (16) umfasst, die auf mindestens eine der Pollerpinnen (12) passt.

5. Vorrichtung nach einem der vorhergehenden Ansprüche, wobei das Verriegelungselement (50) in Bezug auf die Klemmkausche (32) beweglich ist oder von der Klemmkausche (32) abnehmbar ist.

6. Vorrichtung nach einem der vorhergehenden Ansprüche, wobei die Klemmkausche (32) aus dem Auge (30) des Seils (22) entfernbar ist.

7. Verfahren zum Zurückhalten eines gespanntem Seils (22) von einem Paar von Pollerpinnen (12) auf einem Deck (10) eines Schiffs unter Verwendung der Vorrichtung nach einem der vorhergehenden Ansprüche, wobei das Verfahren umfasst:
Bringen eines oberen Endes des Seils (22) neben das Paar von Pollerpinnen (12);
während des Zurückhaltens des Seils (22) unter Spannung, Positionieren eines Verriegelungselements (50) so, dass es zwischen dem Paar von Pollerpinnen (12) und einer Klemmkausche (32) in einem Auge (30) am oberen Ende des Seils (22) einwirkt, durch Einführen einer länglichen Stange in eine Bohrung (48) der Klemmkausche (32), um sich quer zu einer Längsrichtung des Seils (22) zu erstrecken und über mindestens ein Stützteil (14) mit dem Paar von Pollerpinnen (12) über mindestens ein mit dem Paar von Pollerpinnen (12) gekoppeltes Stützteil zusammenzuwirken; und
Lösen der Rückhaltespannung, bis die Spannung des Seils (22) durch das Zusammenwirken zwischen dem Verriegelungselement (50) und dem mindestens einen Stützteil (14) auf das Paar von Pollerpinnen (12) übertragen wird.

8. Verfahren nach Anspruch 7, dem das Einführen der Klemmkausche (32) in das Auge (30) am oberen Ende des Seils (22) vorausgeht.

9. Verfahren nach Anspruch 7 oder Anspruch 8, ferner umfassend das Montieren des Stützteils (14) am Paar von Pollerpinnen (12) oder das Koppeln des Stützteils (14) mit diesem.

10. Verfahren zum Lösen eines von einem Paar von Pollerpinnen (12) auf einem Deck (10) eines Schiffs unter Verwendung der Vorrichtung nach einem der Ansprüche 1 bis 6 zurückgehaltenen gespannten Seils (22), wobei das Verfahren umfasst:
Anwenden einer Rückhaltespannung auf das Seil (22), bis die Spannung des Seils vom Paar von Pollerpinnen (12) weg übertragen wird;
Bewegen oder Entfernen eines Verriegelungselements (50), das zwischen dem Paar von Pollerpinnen (12) und einer Klemmkausche (32) in einem Auge (30) am oberen Ende des Seils (22) einwirkt, durch Entfernen einer länglichen Stange, die sich quer zu einer Längsrichtung des Seils (22) von einer Bohrung (48) der Klemmkausche (32) erstreckt und mit dem Paar von Pollerpinnen (12) über mindestens ein Stützteil (14), das mit dem Paar von Pollerpinnen (12) gekoppelt ist, zusammenwirkt; und
Halten der Rückhaltespannung, während das obere Ende des Seils (22) vom Paar von Pollerpinnen (12) weg bewegt wird.

11. Verfahren zum Verbinden eines zusätzlichen Ausrüstungsgegenstands, wie beispielsweise eines Verbinders (46) zwischen Seilabschnitten, mit einem gespannten Seilabschnitt (22), der von einem Paar von Pollerpinnen (12) auf einem Deck (10) eines Schiffs zurückgehalten wird, unter Verwendung der Vorrichtung nach einem der Ansprüche 1 bis 6, wobei das Verfahren umfasst:
Verbinden des zusätzlichen Ausrüstungsgegenstands (46) mit dem zurückgehaltenen Seilabschnitt (22);
Zurückziehen des zusätzlichen Ausrüstungsgegenstands (46), um die Spannung des Seilabschnitts (22) vom Paar von Pollerpinnen (12) zu übertragen; und
Bewegen oder Entfernen eines Verriegelungselements (50), das zwischen dem Paar von Pollerpinnen (12) und einer Klemmkausche (32) in einem Auge (30) an einem oberen Ende des Seils (22) einwirkt, durch Entfernen einer länglichen Stange, die sich quer zu einer Längsrichtung des Seils (22) von einer Bohrung (48) der Klemmkausche (32) erstreckt und mit dem Paar von Pollerpinnen (12) über mindestens ein Stützteil (14), das mit dem Paar von Pollerpinnen (12) gekoppelt ist, zusammenwirkt.

## Revendications

1. Appareil pour retenir temporairement un cordage tendu (22) d'une paire de chevilles de boulard (12) sur un pont (10) d'un vaisseau, l'appareil comprenant :
une cosse à coin (32) insérée ou insérable dans un œil (30) au niveau d'une extrémité supérieure du cordage (22) ;
une paire de chevilles de boulard (12) qui sont alignées les unes avec les autres sur un axe qui est transversal par rapport à une direction longitudinale du cordage (22) en cours d'utilisation ; et
au moins une partie de support (14) accouplée à la paire de chevilles de boulard (12), l'au moins une partie de support comprenant une paire de structures pouvant coopérer avec la paire de chevilles de boulard et reliées par une traverse, et au moins un bras de support positionné pour s'étendre à l'opposé de l'une des chevilles de boulard ; et
un élément de verrouillage (50) pouvant être positionné pour agir entre la cosse à coin (32) et la paire de chevilles de boulard (12) en cours d'utilisation, l'élément de verrouillage (50) comprenant une tige allongée agencée pour être insérée dans un alésage (48) de la cosse à coin (32) pour s'étendre transversalement par rapport à une direction longitudinale du cordage (22) en cours d'utilisation, et pour coopérer avec la paire de chevilles de boulard (12) par le biais d'une extrémité libre évidée du bras de support de l'au moins une partie de support (14) qui est façonnée pour compléter la tige allongée de l'élément de verrouillage pour transférer la charge de tension du cordage (22) aux chevilles de boulard (12).

2. Appareil selon la revendication 1, dans lequel les chevilles de boulard (12) sont espacées pour définir un espace entre elles, cet espace recevant le cordage (22) en cours d'utilisation.

3. Appareil selon l'une quelconque des revendications précédentes, dans lequel la partie de support (14) est mobile par rapport à la paire de chevilles de boulard (12) ou est amovible par rapport à la paire de chevilles de boulard (12).

4. Appareil selon la revendication 3, dans lequel la partie de support (14) comprend au moins une coupelle inversée (16) qui s'adapte sur au moins l'une des chevilles de boulard (12).

5. Appareil selon l'une quelconque des revendications précédentes, dans lequel l'élément de verrouillage (50) est mobile par rapport à la casse à coin (32) ou est amovible par rapport à la casse à coin (32).

6. Appareil selon l'une quelconque des revendications précédentes, dans lequel la casse à coin (32) est amovible par rapport à œil (30) du cordage (22).

7. Procédé pour retenir un cordage tendu (22) d'une paire de chevilles de boulard (12) sur un pont (10) d'un vaisseau à l'aide de l'appareil selon l'une quelconque des revendications précédentes, le procédé comprenant :
l'apport d'une extrémité supérieure du cordage (22) à côté de la paire de chevilles de boulard (12) ;
tout en retenant le cordage (22) sous tension, le positionnement d'un élément de verrouillage (50) pour agir entre la paire de chevilles de boulard (12) et une cosse à coin (32) dans un œil (30) au niveau de l'extrémité supérieure du cordage (22) en insérant une tige allongée dans un alésage (48) de la cosse à coin (32) pour s'étendre transversalement par rapport à une direction longitudinale du cordage (22) et pour coopérer avec la paire de chevilles de boulard (12) par l'intermédiaire d'au moins une partie de support (14) accouplée à la paire de chevilles de boulard (12) ; et
le relâchement de la tension de retenue jusqu'à ce que la tension du cordage (22) soit transférée à la paire de chevilles de boulard (12) par le biais de la coopération entre l'élément de verrouillage (50) et l'au moins une partie de support (14).

8. Procédé selon la revendication 7, précédé de l'insertion de la cosse à coin (32) dans l'œil (30) au niveau de l'extrémité supérieure du cordage (22).

9. Procédé selon la revendication 7 ou la revendication 8, comprenant en outre le montage de la partie de support (14) sur, ou l'accouplement de la partie de support (14) à, la paire de chevilles de boulard (12).

10. Procédé de relâchement d'un cordage tendu (22) retenu par une paire de chevilles de boulard (12) sur un pont (10) d'un vaisseau à l'aide de l'appareil selon l'une quelconque des revendications 1 à 6, le procédé comprenant :
l'application d'une tension de retenue sur le cordage (22) jusqu'à ce que la tension du cordage soit transférée à l'opposé de la paire de chevilles de boulard (12) ;
le déplacement ou le retrait d'un élément de verrouillage (50) agissant entre la paire de chevilles de boulard (12) et une cosse à coin (32) dans un œil (30) au niveau de l'extrémité supérieure du cordage (22) en retirant une tige allongée s'étendant transversalement par rapport à une direction longitudinale du cordage (22) à partir d'un alésage (48) de la cosse à coin (32) et coopérant avec la paire de chevilles de boulard (12) par l'intermédiaire d'au moins une partie de support (14) accouplée à la paire de chevilles de boulard (12) ; et
le maintien de la tension de retenue tout en éloignant l'extrémité supérieure du cordage (22) de la paire de chevilles de boulard (12).

11. Procédé pour raccorder un équipement supplémentaire, tel qu'un connecteur (46) entre des sections de cordage, à une section de cordage tendue (22) retenue par une paire de chevilles de boulard (12) sur un pont (10) d'un vaisseau à l'aide de l'appareil selon l'une quelconque des revendications 1 à 6, le procédé comprenant :
le raccord de l'équipement supplémentaire (46) à la section de cordage retenue (22) ;
le retrait de l'équipement supplémentaire (46) pour transférer la tension de la section de cordage (22) de la paire de chevilles de boulard (12) ; et
le déplacement ou le retrait d'un élément de verrouillage (50) agissant entre la paire de chevilles de boulard (12) et une cosse à coin (32) dans un œil (30) au niveau d'une extrémité supérieure du cordage (22) en retirant une tige allongée s'étendant transversalement par rapport à une direction longitudinale du cordage (22) à partir d'un alésage (48) de la cosse à coin (32) et coopérant avec la paire de chevilles de boulard (12) par le biais d'au moins une partie de support (14) accouplée à la paire de chevilles de boulard (12).
